# EUROPEAN PATENT APPLICATION

(11) **EP 4 474 297 A1**
(43) Date of publication of application: **11.12.2024**
(21) Application number: 24179162.3
(22) Date of filing: 31.05.2024
(51) Int. Cl.: B65B 9/20, B29C 65/36, B65B 51/30, B65B 65/00, B65B 59/04

(54) **PACKAGE FORMING APPARATUS AND PACKAGING MACHINE FOR FORMING PACKAGES**

(30) Priority: 08.06.2023 IT 202300011751
(71) Applicant: Tetra Laval Holdings & Finance S.A., 1009 Pully (CH)
(72) Inventor: PRADELLI, Massimo, 41123 Modena (IT); BARBI, Massimiliano, 41123 Modena (IT)
(74) Representative: Tetra Pak - Patent Attorneys SE

(57) **Abstract**

There is described a package forming apparatus (1) comprising a first operative unit (4) and a second operative unit (4). Each one of the first operative unit (4) and the second operative unit (5) comprises a plurality of respective operative devices (7), each one configured to manipulate in collaboration with another operative device (7) a tube (3) filled with a pourable product for forming the packages (2) and a respective conveyor device (8) configured to advance the respective plurality of operative devices (7) along an advancement path (Q). The first operative unit (4) and the second operative unit (5) are controllable in an operative configuration in which the first operative unit (4) and the second operative unit (5) are configured to manipulate the tube (3) and an idle configuration. At least one of the first operative unit (4) and the second operative unit (5) is angularly movable about a rotation axis (A) for controlling the first operative unit (4) and the second operative unit (5) between the respective operative configuration and the respective idle configuration.

## Description

### TECHNICAL FIELD

The present invention relates to a package forming apparatus for forming packages, preferentially sealed packages, for pourable products, preferentially pourable food products.

Advantageously, the present invention also relates to a packaging machine comprising a package forming apparatus for forming packages, preferentially sealed packages, for pourable products, preferentially pourable food products.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber in which the web of packaging material is maintained and advanced. During advancement of the web of packaging material through the isolation chamber, the web of packaging material is formed into a tube and longitudinally sealed.

For completing the forming operations, the tube is filled with a pourable product, e.g. a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus configured to form, transversally seal and cut individual packages from the tube of packaging material.

One kind of package forming apparatus comprises a first operative unit and a second operative unit spaced apart from one another and defining an advancement space through which the tube advances. Each one of the first operative unit and the second operative unit comprises a plurality of operative devices and a conveying device configured to advance the operative devices along respective advancement paths Each operative device of the first operative unit is associated with a respective operative device of the second operative unit. Moreover, each operative device of the first operative unit and the respective operative device of the second operative unit are configured to cooperate with one another for partially shaping, transversally sealing and transversally cutting the tube for forming respective packages.

One kind of package forming apparatus, as e.g. described in EP-A-3254980, relies on advancing the operative devices by linear motor technology, i.e. generating locally controlled electromagnetic fields interacting with magnetic or paramagnetic elements of the operative devices.

In another solution, each conveying device comprises an endless chain and the respective operative devices are connected to the respective endless chain.

Even though the known package forming apparatus and/or packaging machines work satisfactorily well, a desire is felt in the sector to further improve the known package forming apparatuses and/or the known packaging machines.

### DISCLOSURE OF INVENTION

It is therefore an object of the present invention to provide an improved package forming apparatus for forming sealed packages.

According to the present invention, there is provided a package forming apparatus as claimed in claim 1.

Preferred non-limiting embodiments of the package forming apparatus are claimed in the claims being directly and indirectly dependent on claim 1.

According to the present invention there is provided a packaging machine as claimed in claim 15.

### BRIEF DESCRIPTION OF THE DRAWINGS

A non-limiting embodiment of the present invention will be described by way of example with reference to the accompanying drawings, in which:
Figure 1 shows a schematic view of a package forming apparatus according to the present invention, with parts removed for clarity;
Figure 2 shows a perspective view of a portion of the package forming apparatus of Figure 1 with a detail of the package forming apparatus being in a first configuration, with parts removed for clarity;
Figure 3 shows a perspective view of the detail of Figure 2 being in a second configuration, with parts removed for clarity; and
Figure 4 shows a perspective view of a variation of the detail of Figure 2, with parts removed for clarity;

### BEST MODES FOR CARRYING OUT THE INVENTION

Number 1 indicates as a whole a package forming apparatus for producing packages 2, preferentially sealed packages, of a pourable product, in particular a pourable food product, such as milk, milk drinks, yoghurt, yoghurt drinks, fruit juice, wine, tomato sauce, emulsions, beverages containing pulp, salt, sugar, etc., from a tube 3, preferentially advancing along a tube advancement path P and preferentially being filled with the pourable product.

Preferentially, package forming apparatus 1 may be part of a packaging machine configured to produce packages 2 of the pourable product.

In more detail, the packaging machine may be preferentially configured to produce packages 2 from a multilayer packaging material; preferentially, the multilayer packaging material may have heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web of packaging material.

Furthermore, the packaging machine may be configured to produce packages 2 by forming tube 3 from the web of packaging material, longitudinally sealing tube 3, filling tube 3 with the pourable product and by operating package forming apparatus 1 for at least partially shaping tube 3, transversally sealing, and preferentially transversally cutting tube 3.

In more detail, the packaging machine may comprise a tube forming apparatus configured to form and longitudinally seal tube 3 and a filling apparatus configured to fill tube 3 with the pourable product.

Preferentially, tube 3 may extend along a central axis.

Moreover, the tube forming apparatus may also comprise:
- a conveying unit configured to advance the web of packaging material along a web advancement path, preferentially to a tube forming station, at which, in use, the web of packaging material is formed into tube 3, and configured to advance tube 3 along tube advancement path P; and
- a tube forming and sealing device configured to form tube 3 from the, in use, advancing web of packaging material and to longitudinally seal tube 3.

In further detail, the tube forming apparatus may also comprise an isolation chamber, preferentially delimiting an inner environment, in particular a sterile inner environment, from an outer environment. Preferentially, tube forming and sealing device may be at least partially arranged within the isolation chamber, in particular within the inner environment, and being configured to fold and longitudinally seal tube 3 within the isolation chamber, in particular within the inner environment.

Moreover, the packaging machine may also comprise a sterilization unit configured to sterilize the, in use, advancing web of packaging material, preferentially the sterilization unit being arranged upstream of the tube forming apparatus.

Preferentially, package forming apparatus 1 may be arranged downstream of the tube forming apparatus and may be configured to receive tube 3 from the tube forming apparatus.

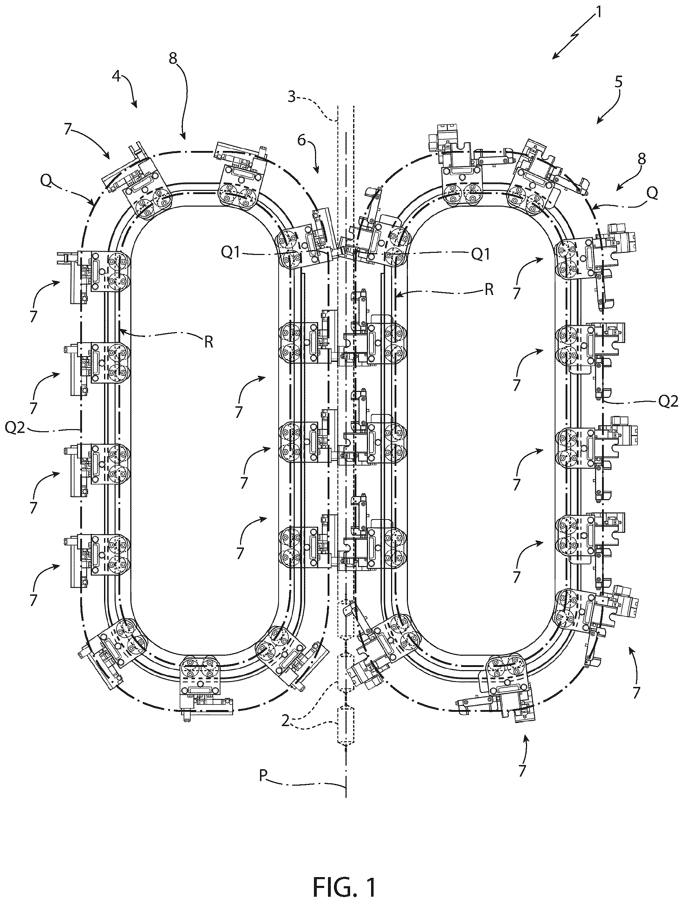

In further detail and with particular reference to Figure 1, package forming apparatus 1 may be configured to manipulate tube 3 being formed from the web of packaging material.

Packaging forming apparatus 1 comprises a first operative unit 4 and a second operative unit 5 spaced apart from one another and defining an advancement space 6 within which, in use, tube 3 advances, when first operative unit 4 and second operative unit 5 are controlled in an operative configuration.

Preferentially, first operative unit 4 and second operative unit 5 are configured to cooperate with one another so as to manipulate tube 3 for forming packages 2 from the, in use, advancing tube 3, when being controlled in the operative configuration.

As will be explained in more detail further below, first operative unit 4 and second operative unit 5 are also controllable in an idle configuration different from the operative configuration.

It should be noted that there may be a plurality of specific arrangements of first operative unit 4 and second operative unit 5 when being in the idle configuration, i.e. there is not only one single (unique) idle configuration but preferentially a plurality of configurations of first operative unit 4 and second operative unit 5 define the idle configuration.

Preferentially, when first operative unit 4 and second operative unit 5 are controlled in the idle configuration maintenance operations of first operative unit 4 and second operative unit 5 are facilitated.

In particular, first operative unit 4 and second operative 5 may be spaced apart from one another along a direction transversal, preferentially perpendicular, to tube advancement path P.

In more detail, each one of first operative unit 4 and second operative unit 5 comprises:
- a plurality of respective operative devices 7, each one configured to manipulate in collaboration with another operative device 7 tube 3 for forming packages 2 from tube 3; and
- a respective conveyor device 8 configured to advance the respective plurality of operative devices 7 along a respective advancement path Q, preferentially an endless advancement path Q.

More specifically, each operative device 7 of first operative unit 4 is configured to cooperate with a respective operative device 7 of second operative unit 5 for manipulating, preferentially at least partially shaping and/or transversally sealing and/or transversally cutting tube 3 for forming packages 2 from tube 3.

Even more specifically, each operative device 7 of first operative unit 4 and the respective operative device 7 of second operative unit 5 may form a respective pair of operative devices 7 configured to cooperate with one another for manipulating tube 3.

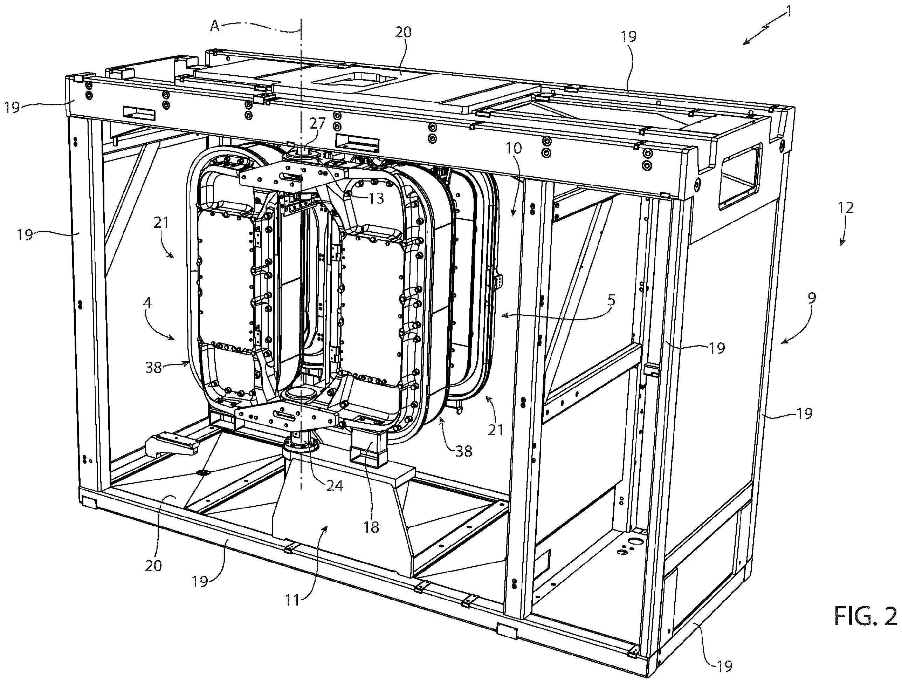

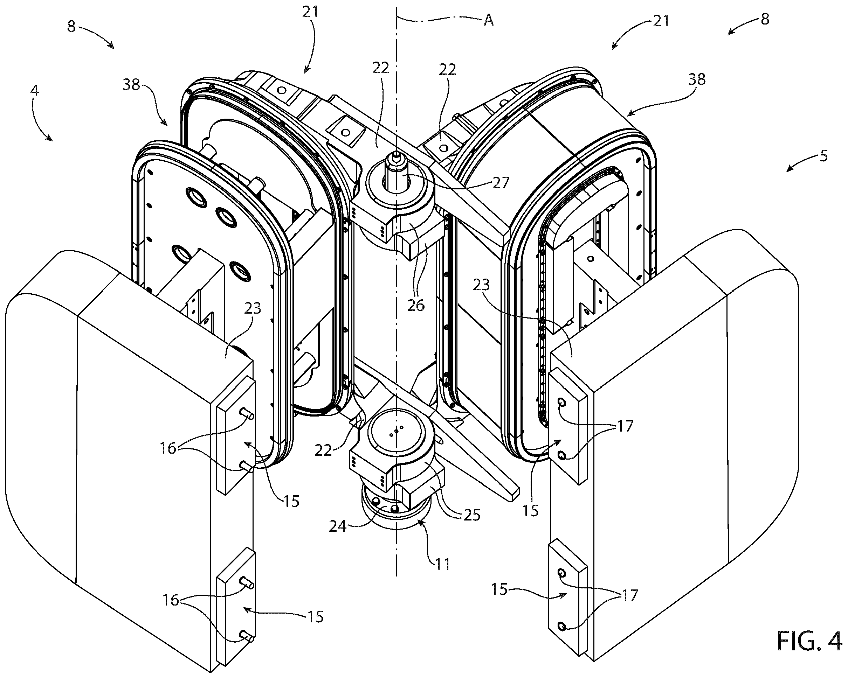

With particular reference to Figures 2 and 4, package forming apparatus 1 further comprises a support frame 9 carrying first operative unit 4 and second operative unit 5.

More specifically, support frame 9 defines and/or delimits an inner space 10. Moreover, tube 3 may advance, in use, from the inner environment delimited by the isolation chamber into inner space 10.

Additionally, advancement space 6 may be arranged within and/or may correspond to a portion of inner space 10.

According to some preferred non-limiting embodiments, support frame 9 may carry the isolation chamber. More specifically, the isolation chamber may vertically erect from support frame 9.

Moreover, in use, while first operative unit 4 and second operative unit 5 manipulate tube 3 for forming packages 2, first operative unit 4 and second operative unit 5 are arranged within inner space 10.

In further detail, support frame 9 may comprise a support platform 11. Preferentially, first operative unit 4 and second operative unit 5 may be connected to and/or carried by support platform 11. In particular, support platform 11 may be arranged at a first terminal portion of support frame 9.

Additionally, first operative unit 4 and second operative unit 5 may also be connected to a connection portion 13 of support frame 9, preferentially connection portion 13 may be opposed to support platform 11. More preferentially, connection portion 13 may be arranged at a second terminal portion of support frame 9.

First operative unit 4 and second operative unit 5 may be interposed between support frame 9 and connection portion 13.

In further detail and with particular reference to Figures 2 to 4, first operative unit 4 and second operative unit 5 are controllable in the operative configuration in which first operative unit 4 and second operative unit 5 are configured to manipulate tube 3 and the idle configuration in which first operative unit 4 and second operative unit 5 are controlled away from the operative configuration. In other words, first operative unit 4 and second operative unit 5 are in a nominal position for being able to manipulate tube 3 for forming packages 2 when being in the operative configuration. When being in the idle configuration, first operative unit 4 and second operative unit 5 are not able to manipulate tube 3. In particular, when being in the idle configuration, it may be possible to execute maintenance work on first operative unit 4 and/or second operative unit 5.

It should be noted that advantageously first operative unit 4 and second operative unit 5 are arranged within inner space 10 when being controlled in the operative configuration.

Figures 1 and 2 shows first operative unit 4 and second operative unit 5 being in the operative configuration. Figure 2 illustrates that first operative unit 4 and second operative unit 5 are fully arranged within inner space 10.

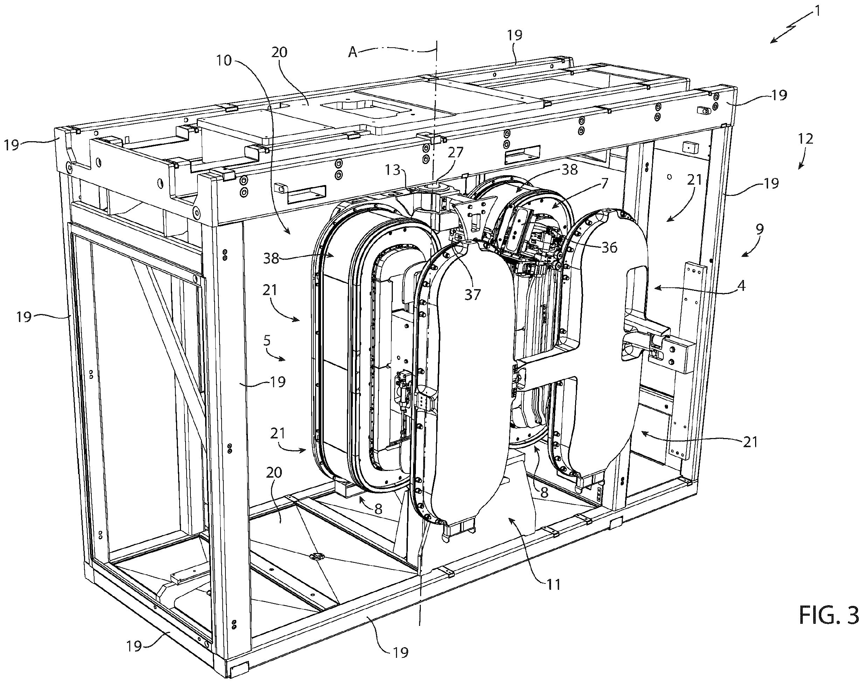

Figure 3 shows first operative unit 4 and second operative unit 5 being in the idle configuration. It should be considered that first operative unit 4 and second operative unit 5 may take different specific positions when being in the idle configuration. This is for example shown when comparing the configuration of Figure 3 with the configuration of Figure 4. Figure 4 illustrates a variation of a portion of first operative unit 4 and second operative unit 5.

Advantageously, at least one of first operative unit 4 and second operative unit 5, preferentially each one first operative unit 4 and second operative unit 5, is/are angularly movable about a respective rotation axis A, preferentially being parallel to tube advancement path P and/or having a respective vertical orientation.

According to the example shown, first operative unit 4 and second operative unit 5 are rotatable about the same rotation axis A. According to an alternative embodiment not shown, first operative unit 4 and second operative unit 5 are each rotatable about a respective rotation axis A, rotation axis A of first operative unit 4 being distinct from rotation axis A of second operative unit 5. According to an even other embodiment not shown, only one of first operative unit 4 and second operative unit 5 may be rotatable about rotation axis A, while the other one of first operative unit 4 and second operative unit 5 may be fixed in space and with respect to support frame 9.

Moreover, first operative unit 4 and second operative unit 5 are configured such that an angular movement of at least one of first operative unit 4 and second operative unit 5 and/or of both first operative unit 4 and second operative unit 5 about the respective rotation axis A allows to control first operative unit 4 and second operative unit 5 between the respective operative configuration and the respective idle configuration.

In further detail, each one of first operative unit 4 and second operative unit 5 may be arranged in a respective first angular position with respect to the respective rotation axes A when being in the operative configuration.

Additionally, when being controlled in the idle configuration, the respective angular position of first operative unit 4 and/or of second operative unit 5 with respect to the respective rotation axes A may be different from the respective first angular position.

It should be noted that it is possible to move first operative unit 4 and second operative unit 5 away from the operative configuration by e.g. changing the angular position of one or both of first operative unit 4 and second operative unit 5.

In the idle configuration shown Figure 3 the first operative unit 4 and the second operative unit 5 have been rotated of an angle of 180 degrees about the respective rotation axes A compared to the operative configuration shown in Figure 2.

When reverting to Figure 2, one notes that the angular positions of first operative unit 4 and the angular position of second operative unit 5 with respect to the respective rotation axes A correspond to the respective first angular position and first operative unit 4 and second operative unit 5 are arranged within inner space 10.

When reverting to Figure 3 one notes that both first operative unit 4 and second operative unit 5 have been angularly moved about the respective rotation axes A and both first operative unit 4 and second operative unit 5 are arranged in respective second angular positions with respect to the respective rotation axes A. One notes that a technical operator may easily access the space formed between first operative unit 4 and second operative unit 5 such as to perform maintenance activities.

When reverting to Figure 3, one notes that first operative unit 4 and second operative unit 5 may also be positionable at least partially within an outer space 12 defined by support frame 9 and with first operative unit 4 and second operative unit 5 being controlled in the idle configuration. Preferentially, in such a situation, the respective second angular position of first operative unit 4 and the respective second angular position of second operative unit 5 with respect to the respective rotation axes A differ from the respective first angular positions.

For this reason, preferentially support platform 11 and connection portion 13 of support frame 9 may be arranged at a lateral section of support frame 9.

According to some preferred non-limiting embodiments, the respective rotation axis A of first operative unit 4 and the respective rotation axis A of second operative unit 5 coincide.

According to some preferred non-limiting embodiments, first operative unit 4 and second operative unit 5 may be angularly moveably connected to support platform 11 and connection portion 13 of support frame 9.

Preferentially, rotation axis A may extend between and/or may be defined by support platform 11 and connection portion 13 of support frame 9.

With particular reference to Figure 4, each one of the first operative unit 4 and second operative unit 5 may comprise at least one respective abutment surface 15 abutting against one another with first operative unit 4 and second operative unit 5 being controlled in the operative configuration. According to the variation of Figure 4, each one of first operative unit 4 and second operative unit 5 may comprise two respective abutment surfaces 15, while in the variation of Figures 2 and 3, each one of first operative unit 4 and second operative unit 5 may comprise only one respective abutment surface 15.

Additionally, first operative unit 4 may comprise one or more first interaction elements 16 and second operative unit 5 may comprise one or more second interaction element 17. Each first interaction element 16 may be configured to engage and/or interact with a respective second interaction element 17 with first operative unit 4 and second operative unit 5 being controlled in the operative configuration, in particular so as to guarantee that first operative unit 4 and second operative unit 5 are correctly arranged (and maintained) in the operative position.

Preferentially, each first interaction element 16 and the respective second interaction element 17 may be complementary to one another.

In further detail, each first interaction element 16 may be chosen from a group comprising pins, bars and rods and each second interaction element 17 may be chosen from a group comprising holes, grooves and slots.

According to some preferred non-limiting embodiments, package forming apparatus 1 may further comprise a first locking device configured to lock first operative unit 4 and second operative unit 5 in the operative configuration.

Additionally or alternatively, package forming apparatus 1 may comprise a second locking device configured to lock first operative unit 4 and the second operative unit 5 in the idle configuration.

According to some possible embodiments, first operative unit 4 and/or second operative unit 5 may comprise at least a portion of the first locking device and/or the second locking device and/or support frame 9 may comprise another portion of the first locking device and/or the second locking device configured to cooperate with the respective portion of, respectively, the first locking device and the second locking device.

According to some possible non-limiting embodiments, package forming apparatus 1 may further comprise a delimitation element 18. Moreover, at least one of first operative unit 4 and second operative unit 5 may abut against delimitation element 18 with first operative unit 4 and second operative unit 5 being in the operative configuration and for guaranteeing, in use, a desired position of the first operative unit 4 and second operative unit 5 with respect to tube 3. In other words, delimitation element 18 may be configured to guarantee that first operative unit 4 and second operative unit 5 may be arranged in the respective first angular position with first operative unit 4 and second operative unit being arranged in the operative configuration.

Preferentially, support frame 9, more preferentially support platform 11, may carry delimiting element 18.

In further detail and with particular reference to Figures 2 and 3, support frame 9 may comprises a plurality of bars 19, e.g. some having vertical orientations and some other having horizontal orientations. Additionally, support frame 9 may also comprise a plurality of wall elements 20 (only some shown) interposed between respective bars 19. Support frame 9 may also comprise one or more doors (not shown) selectively movable between respective open positions and closed positions for, respectively, allowing to access inner space 10 and impeding to access inner space 10. Additionally, one or more doors may be configured to be arranged in the respective open position so as to allow to position first operative unit 4 and second operative unit 5 in outer space 12.

In further detail and with particular reference to Figures 2 to 4, each one of first operative unit 4 and second operative unit 5 may comprise a respective support structure 21 carrying the respective operative devices 7 and the respective conveying device 8.

Each support structure 21 may be angularly movable about the respective rotation axis A.

Moreover, each support structure 21 may be hinged to support frame 9, preferentially support platform 11 and connection portion 13 of support frame 9, and the respective hinge axis may define the respective rotation axis A.

According to some preferred non-limiting embodiments, each support structure 21 may be hinged to support frame 9 at a first lateral portion 22.

Additionally, each support structure 21 may comprise a second lateral portion 23 opposed to the respective first lateral portion 22. Preferentially, each second lateral portion 23 may comprise the respective abutment surface(s) 15.

According to the variant of Figures 2 and 3, the respective abutment surfaces 15 may be in respective central portions of first operative unit 4 and of second operative unit 5, while in the variant of Figure 4, the respective abutment surfaces 15 may be arranged at respective end sections of the respective lateral portions 23.

In further detail, support platform 11 may comprise a support pillar 24 and each support structure 21, preferentially the respective first lateral portion 22, may comprise a first coupling element 25, preferentially provided with a respective through-hole, being angularly moveably coupled to support pillar 24. In particular, first coupling elements 25 may be arranged on top of one another.

Additionally, each support structure 21 may also comprise a respective second coupling element 26 opposed to the respective first coupling element 25, and preferentially comprising a respective through-hole. Preferentially, the respective second coupling elements 26 may be arranged on top of one another.

Preferentially, connection portion 13 of support frame 9 may comprise a coupling pin 27, preferentially protruding towards support platform 11.

Preferentially, each second coupling element 26 may be angularly moveably coupled to coupling pin 27.

According to some preferred non-limiting embodiments, each conveying device 8 may be configured to advance the respective operative devices 7 along a respective operative portion Q1 and a respective return portion Q2 of the respective advancement path Q.

More specifically, each operative device 7 may be configured to manipulate tube 3 and being retracted from tube 3 when advancing, in use, along, respectively, the respective operative portion Q1 and the respective return portion Q2. In other words, each operative device 7 may be configured to manipulate tube 3 when advancing along the respective operative portion of advancement path Q1.

Additionally, each operative device 7 may be controlled from a respective rest configuration to a respective operative configuration while advancing along the respective operative portion Q1. In particular, each operative device 7 may be configured to manipulate, preferentially to at least partially shape and/or transversally seal and/or transversally cut, tube 3 when being controlled in the respective operative configuration. Moreover, each operative device 7 may be configured to be retracted from tube 3 when being controlled in the respective rest configuration.

Preferentially, each operative device 7 may be controlled in the respective rest configuration while advancing along the respective return portion Q2 of advancement path Q.

In further detail, each operative device 7 may advance along the same direction as tube 3 while advancing along the respective operative portion Q1.

More specifically and with particular reference to Figure 3, each operative device 7 may comprise:
- a half-shell 36 configured to at least partially shape tube 3, preferentially with the respective operative device 7 being controlled in the respective operative configuration; and
- one of a sealing element or a counter-sealing element, configured to transversally seal tube 3 between adjacent packages 2, preferentially with the respective operative device 7 being controlled in the operative configuration.

According to some possible embodiments, each operative device 7 of first operative unit 4 may comprise a respective counter-sealing element and each operative device 7 of second operative unit 5 may comprise a respective sealing element. Alternatively, each operative device 7 of first operative unit 4 may comprise a respective sealing element and each operative device 7 of second operative unit 5 may comprise a respective counter-sealing element.

It should be further noted that each operative device 7 having a respective sealing element is configured to cooperate with a respective operative device 7 having a counter-sealing element. In this way, each sealing element and the respective counter-sealing element are configured to transversally flat-lay tube 3 and to transversally seal tube in cooperation with one another and with the respective operative device 7 being controlled in the respective operative configuration.

In further detail, each half-shell 36 may be configured to move between at least a first limit position and a second limit position, e.g. by means of an angular and/or linear movement, at which half-shell 36 may be configured to engage tube 3.

Advantageously, each half-shell 36 may be positioned in the respective first limit position and the respective second limit position with the respective operative device 7 being controlled in respectively the corresponding rest configuration and the corresponding operative configuration.

According to some possible non-limiting embodiments, package forming apparatus 1 may comprise a cam mechanism for controlling half-shells 36 between the respective rest configurations and the respective operative configurations.

At least some operative devices 7 may also comprise a cutting element configured to transversally cut tube 3, preferentially with the respective operative device 7 being controlled in the respective operative configuration and after execution of the transversal sealing of tube 3.

Preferentially, each operative device 7 of first operative unit 4 and the respective operative device 7 of second operative unit 5 may comprise together one respective cutting element.

In further detail and according to the specific examples shown in Figures 1 to 4, each conveyor device 8 may be configured to control advancement of the respective operative devices 7 along advancement path Q by means of a locally controlled electromagnetic field.

In more detail, each conveyor device 8 may comprise a plurality of carts 37 and a control unit 38 configured to advance the carts 37 along a respective auxiliary advancement path R, preferentially an endless auxiliary advancement path R. In particular, each cart 37 may be moveably coupled to the respective control unit 38.

Preferentially, each control unit 38 may be configured to selectively advance each cart 37 independently from the other carts 37.

Moreover, each control unit 38 may comprises a plurality of induction coils and may be configured to selectively generate local electromagnetic fields for controlling advancement of the respective carts 37. Additionally, each cart 37 may comprise one or more magnetic or paramagnetic elements configured to interact with the local electromagnetic fields.

Additionally, each operative device 7 may be connected to one respective cart 37, and preferentially may be laterally displaced from the respective cart 37.

Moreover, advancement of carts 37 along the respective auxiliary advancement paths R lead to advancement of the respective operative devices 7 along the respective advancement paths Q.

Each auxiliary advancement path R may be parallel to the respective advancement path Q.

In use, the packaging machine forms packages 2 from a web of packaging material, the packages 2 being filled with the pourable product.

The tube forming apparatus forms tube 3 from the web of packaging material, the filling apparatus fills tube 3 and package forming apparatus 1 manipulates tube 3 so as to obtain packages 2 filled with the pourable product.

In more detail, during operation of package forming apparatus 1 tube 3 advances through advancement space 6 and first operative unit 4 and second operative unit 5 cooperate for obtaining packages 2.

More specifically, each operative device 7 of first operative unit 4 cooperates, preferentially cyclically cooperates, with the respective operative device 7 of second operative unit 5 for forming respective packages 2 from advancing tube 3.

Additionally, during manipulation of tube 3 first operative unit 4 and second operative unit 5 are controlled in the operative configuration. If needed, production may be interrupted and/or stopped and/or ended and first operative unit 4 and second operative unit 5 may be controlled in the idle configuration. This is done by moving at least one of first operative unit 4 and second operative unit 5 about the respective rotation axis A.

A technical operator can execute maintenance activities with first operative unit 4 and second operative unit 5 being controlled in the idle configuration.

The advantages of package forming apparatus 1 and/or the packaging machine according to the present invention will be clear from the foregoing description.

In particular, by having at least one of first operative unit 4 and second operative unit 5 being rotatable about the respective rotation axis A, maintenance work is facilitated.

Furthermore, the possibility of arranging first operative unit 4 and second operative unit 5 in the idle configuration is advantageous in that the technical operator can access parts of first operative unit 4 and second operative unit 5 from outer space 12.

Clearly, changes may be made to package forming apparatus 1 and/or the packaging machine as described herein without, however, departing from the scope of protection as defined in the accompanying claims.

According to some possible embodiments not shown, the plurality of operative devices 7 of first operative unit 4 and the plurality of operative devices 7 of second operative unit 5 may be connected to one another and/or define a respective endless chain. Additionally, each conveyor device may be configured to advance the respective endless chain along an auxiliary advancement path so as to advance the respective operative devices 7 along the respective advancement path Q.

## Claims

1. A package forming apparatus (1) for forming packages (2) from a tube (3) filled with a pourable product, the package forming apparatus (1) comprising:
- a first operative unit (4) and a second operative unit (4) spaced apart from one another and defining an advancement space (6) within which, in use, the tube (3) advances;
wherein each one of the first operative unit (4) and the second operative unit (5) comprises:
- a plurality of respective operative devices (7), each operative device (7) of the first operative unit (4) being configured to manipulate in collaboration with a respective operative device (7) of the second operative unit (5) the tube (3) for forming the packages (2); and
- a respective conveyor device (8) configured to advance the respective plurality of operative devices (7) along an advancement path (Q);
wherein the first operative unit (4) and the second operative unit (5) are controllable in an operative configuration in which the first operative unit (4) and the second operative unit (5) are configured to manipulate the tube (3) and an idle configuration in which the first operative unit (4) and the second operative unit (5) are controlled away from the operative configuration;
wherein at least one of the first operative unit (4) and the second operative unit (5) is angularly movable about a rotation axis (A);
wherein the first operative unit (4) and the second operative unit (5) are configured such that an angular movement of at least one of the first operative unit (4) and the second operative unit (5) about the respective rotation axis (A) allows to control the first operative unit (4) and the second operative unit (5) between the respective operative configuration and the respective idle configuration.

2. Package forming apparatus according to claim 1, wherein both, the first operative unit (4) and the second operative unit (5) are angularly movable about respective rotation axes (A);
wherein an angular movement of the first operative unit (4) and/or the second operative unit (5) about the respective rotation axes (A) allows control of the first operative unit (4) and the second operative unit (5) between the respective operative configuration and the respective idle configuration.

3. Package forming apparatus according to claim 2, wherein the respective rotation axis (A) of the first operative unit (4) and the respective rotation axis (A) of the second operative unit (5) coincide.

4. Package forming apparatus according to any one of the preceding claims, wherein each one of the first operative unit (4) and the second operative unit (5) comprises a respective abutment surface (15), the abutment surface (15) of one of the first operative unit (4) and the second operative unit (5) abutting against the abutment surface (15) of the other one of the first operative unit (4) and the second operative unit (5) with the first operative unit (4) and the second operative unit (5) being controlled in the operative configuration.

5. Package forming apparatus according to any one of the preceding claims, wherein the first operative unit (4) comprises one or more first interaction elements (16) and the second operative unit (5) comprises one or more second interaction elements (17);
wherein each first interaction element (16) is configured to engage with a respective second interaction element (17) with the first operative unit (4) and the second operative unit (5) being controlled in the operative configuration.

6. Package forming apparatus according to claim 5,
wherein each first interaction element (16) and the respective second interaction element (17) are complementary to one another and/or
wherein each first interaction element (16) is chosen from a group comprising pins, bars and rods and/or each second interaction element (17) is chosen from a group comprising holes, grooves and slots.

7. Package forming apparatus according to any one of the preceding claims, and further comprising one first locking device configured to lock the first operative unit (4) and the second operative unit (5) in the operative configuration; and/or
a second locking device configured to lock the first operative unit (4) and the second operative unit (5) in the idle configuration.

8. Package forming apparatus according to any one of the preceding claims, and further comprising a delimitation element (18);
wherein at least one of the first operative unit (4) and the second operative unit (5) abuts against the delimitation element (18) with the first operative unit (4) and the second operative unit (5) being in the operative configuration and for guaranteeing, in use, a desired position of the first operative unit (4) and the second operative unit (5) with respect to the tube (3).

9. Package forming apparatus according to any one of the preceding claims, and further comprising a support frame (9) ;
wherein the support frame (9) carries the first operative unit (4) and the second operative unit (5).

10. Package forming apparatus according to claim 9, wherein the support frame (9) comprises a support platform (11) and the first operative unit (4) and the second operative unit (5) are angularly moveably connected to the support platform (11);
wherein the first operative unit (4) and the second operative unit (5) are also angularly moveably connected to a connection portion (13) of the support frame (9);
wherein the rotation axis (A) extends between the support platform (11) and the connection portion (13) of the support frame (9);
wherein both the first operative unit (4) and the second operative unit (5) are angularly movable about the same rotation axis (A).

11. Package forming apparatus according to claim 9 or 10, wherein the support frame (9) defines and/or comprises an inner space (11);
wherein the first operative unit (4) and the second operative unit (5) are arranged within the inner space (11) when being controlled in the operative configuration.

12. Package forming apparatus according to claim 11, wherein the first operative unit (4) and the second operative unit (5) are at least partially positionable within an outer space (12) defined by the support frame (9) and with the first operative unit (4) and the second operative unit (5) being arranged in the idle configuration.

13. Package forming apparatus according to any one of the preceding claims, wherein the tube (3) advances, in use, along a tube advancement path (P) and
each rotation axis (A) is parallel to the tube advancement path (P); and/or
each rotation axis (A) has a substantially vertical orientation.

14. Package forming apparatus according to any one of the preceding claims, wherein each conveyor device (8) comprises a plurality of carts (37) and is configured to advance the plurality of carts (37) along an auxiliary advancement path (P);
wherein each operative device (7) is connected to the respective cart (37);
wherein advancement of each cart (37) along the respective auxiliary advancement path (R) leads to advancement of the respective operative devices (7) along the advancement path (Q); or
the plurality of operative devices (7) of the first operative unit (4) and the plurality of operative devices (7) of the respective second operative unit (5) are connected to one another and/or define a respective endless chain;
wherein each conveyor device is configured to advance the respective chain along an endless advancement path.

15. Packaging machine for forming packages (2) filled with a pourable product comprising a tube forming apparatus configured to form a tube (3) from a web of packaging material and a package forming apparatus (1) according to any one of the preceding claims and being configured to form the packages (2) from the tube (3).
